# EUROPEAN PATENT SPECIFICATION

(11) **EP 0 413 458 B1**
(45) Date of publication and mention of the grant of the patent: **04.10.1995**
(21) Application number: 90308344.2
(22) Date of filing: 30.07.1990
(51) Int. Cl.: G11B 27/36, G11B 20/10, G11B 27/00

(54) **Disc player**
Plattenwiedergabegerät
Lecteur de disques

(30) Priority: 18.08.1989 JP 212515/89
(43) Date of publication of application: 20.02.1991
(73) Proprietor: SONY CORPORATION, Tokyo (JP)
(72) Inventor: Nagano, Shuichi, Shinagawa-ku, Tokyo (JP)
(74) Representative: Ayers, Martyn Lewis Stanley

(56) References cited:
- EP-A- 0 255 918
- EP-A- 0 283 304
- EP-A- 0 306 151
- DE-A- 3 428 048
- PATENT ABSTRACTS OF JAPAN vol. 13, no. 279 (P-891) 27 June 1989;& JP-A-1066870

## Description

This invention relates to a disc player, such as a CD (compact disc) player for reproducing digital audio signals from a CD. More particularly, it relates to a disc player having the facility to detect the maximum signal level of the digital audio signals recorded on the disc to be reproduced, and a method for detecting the peak signal level.

On a CD, the start of the spiral record track is towards the centre of the disc and the end, towards its outer periphery. During continuous playback operation, signal reproduction proceeds from the centre towards the outer periphery of the disc. The program information, recorded on the CD, takes the form of a set of plural program data sections each corresponding to a musical number, and is recorded along with address information. At the inner periphery of the spiral record track, there are recorded data indicating, for example, the number of recorded program data sections or the time required for reproducing the recorded program data sections from the playback start end to the playback terminal end, that is the total playback time, so-called table of contents data or TOC data.

In reproducing a CD on which address data are recorded along with the plural program data sections, the playback address data may be utilised to select a desired section of the program data for reproduction.

Thus, in addition to the usual operational modes for continuous reproduction for sequentially reproducing the plural program data sections recorded on the CD, various other operational modes of reproduction may be provided, such as an operational mode in which the program data is reproduced in an arbitrarily set playing sequence, or an operational mode for reproducing the program data in a random sequence (shuffle mode).

These program data reproducing functions of the CD player can be used, for example, for a dubbing operation in which the record contents of plural disks are selected arbitrarily, the playback sequence is set to a desired program and the record contents on the disks are selectively reproduced so as to be recorded and edited on magnetic tape.

On a tape recorder the signal level of the analog audio signals to be recorded is usually indicated by level detection/display means, such as peak level meters, to enable an optimum recording level to be set by the user on the basis of the display contents by the level detection display means so as to reduce distortion of the recorded signal. This optimum recording level is usually set to the maximum signal level of the analog audio signals to be recorded.

Meanwhile, in a disc player for reproducing a digital audio disc, such as a compact disc CD, the audio data reproduced from the digital audio disc can be monitored by, for example, a microcomputer, so as to detect the maximum playback output level. However, the digital audio signals recorded on the digital audio disc are constituted by digital data samples at a sampling frequency high enough to satisfy the Nyquist condition and they have a wide dynamic range. For example, in the case of a compact disc (CD), the digital audio signal comprises 16-bit digital data samples having a sampling frequency of 44.1 kHz. For this reason, the maximum value of the audio data reproduced from the digital audio signals from the digital audio disc if detected directly may have an instantaneous peak value that could not be sensed by the listener's ears or be detected or displayed by level detection display means provided in the tape recorder. If used as the basis for setting the recording level, or the like, this could result in an unnecessarily low level being set, resulting in degraded signal to noise ratio of the recording. Further, to establish the maximum instantaneous value requires the entire program material on the disc, which at normal playback speed would take the total playing time of the disc. On the other hand, attempting to set the record level by ear or by use of level detection display means may result in a sub-optimal setting.

Thus, in a disc player in which the digital audio disc, such a compact disc CD on which the digital audio signals are recorded previously, though the maximum playback output level, that is, the data peak value, can in principle bet detected by monitoring the audio data reproduced from the digital audio disc using, for example, a micro-computer, it would take the total playback time at the normal reproducing mode of the disc to do it, which is clearly inconvenient.

EP-A-0,283,304 discloses a CD player according to the preamble of claim 1.

EP-A-0,306,151 discloses a CD player capable of reproducing data at twice the normal rate to perform a high speed dubbing function.

It is therefore an object of the present invention to provide a disc player in which, when the audio signals reproduced from a digital audio disc are recorded in a tape recorder the optimum recording level can be set efficiently in a shorter time. With the disc player of the present invention, the peak value of the audio signals reproduced from the digital audio signals may be detected promptly.

According to a first aspect of the invention, there is provided a disc player for reproducing recorded digital audio signals from a disc comprising:
disc reproducing means having a normal playback mode for performing a normal playback operation at a speed determined by the timing of normal reproducing clock signals; and
maximum playback output level detecting means for detecting the maximum playback output level of digital audio signals obtained upon reproducing said digital audio signals from a disc; characterised in that:
said disc reproducing means also has a high speed playback mode for performing a high speed playback function at a speed determined by the timing of high speed reproducing clock signals having a frequency higher than the frequency of said normal reproducing clocks; and
said maximum playback output level detection means is operative whilst said disc reproducing means is operating in said high speed playback mode to integrate the digital audio signals reproduced by said disc reproducing means over each of a succession of predetermined integrating time intervals, to compare the integrated values so obtained to find the maximum integrated value and to designate the value so formed as the maximum playback output level.

According to a second aspect of the invention, there is provided a method for detecting a peak value in digital audio signals comprising:
integrating the digital audio signal reproduced by reproducing means from a recording medium having said digital audio signals recorded thereon over each of a succession of predetermined integrating time intervals and comparing the integrated values for the integrating time periods to find the maximum integrated value which then is used as the peak information.

The disc reproducing means of the disc player of the present invention reproduced and outputs, from the digital audio disc, the audio data timed to the normal reproducing clocks in the normal reproducing mode in accordance with the normal playback function, while reproducing and outputting, from the same digital audio disc, the audio data timed to the high-speed reproducing clocks having a frequency higher than the frequency of the normal reproducing clocks in the high speed reproducing mode in accordance with the high speed playback function. The maximum playback output level detection means detects the maximum playback output level of the audio data reproduced for the digital audio disc by the high speed reproducing operation of the disc reproducing means. In accordance with the method of the present invention for detecting the peak of the digital audio signals, digital audio data are integrated over each of a succession of predetermined integration time periods. The values of integration for the integration time periods are compared to one another to find the maximum value of integration which is then stored as the peak information.

Since detection of the maximum playback output of the reproduced audio data in the high speed mode reproducing mode, the data peak value may be detected in a shorter time, enabling the optimum recording level to be set efficiently.

In accordance with the method of the present invention for detecting the peak value of the digital audio signals, the digital audio data are integrated over a succession of predetermined integrating intervals, and the maximum integrated value is stored as the peak information. Thus peak detection may be achieved in a manner to adequately cope with the characteristics of human hearing or the level meter response characteristics of the tape recorder. This avoids a maximum peak value corresponding to a sound that cannot be perceived by the listener's ears or displayed by level detection/display means of the tape recorder or the like being detected as the peak value.

Thus, with the use of the peak information obtained by the method of the present invention for detecting the peak value of the digital audio signals, the optimum recording level can be set accurately during tape editing and the like.

The invention will be further described by way of non-limitative example with reference to the accompanying drawings, in which:-

Figure 1 is a block diagram showing an arrangement of a typical disc player according to the present invention.

Figure 2 is a flow chart showing a picture search mode control operation by a system controller in the disc player shown in figure 1.

Figure 3 is an audio signal waveform diagram for illustrating the picture search mode control operation by the system controller shown in figure 1.

A preferred embodiment of the present invention will be hereinafter explained by referring to the accompanying drawings.

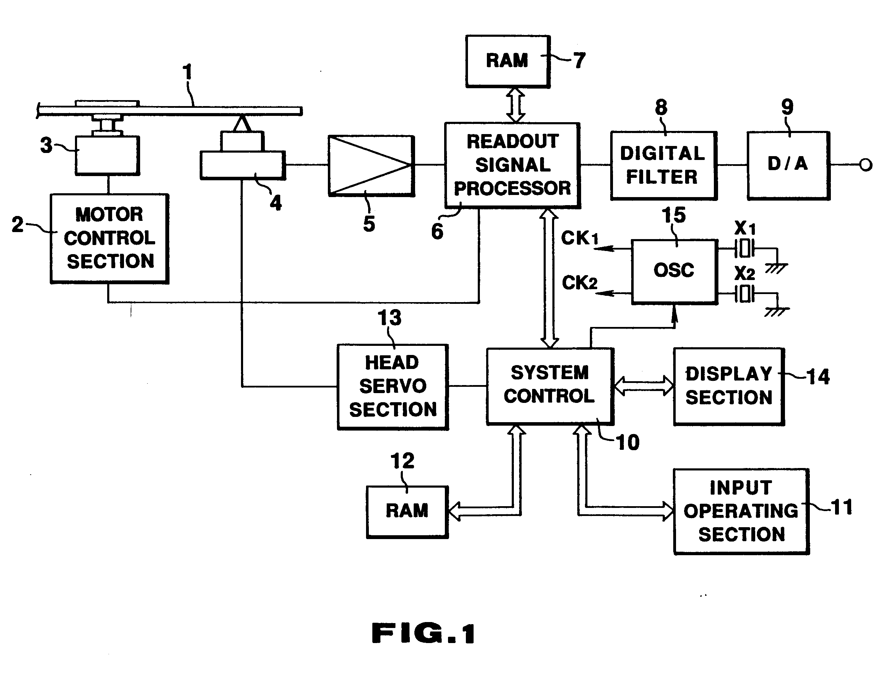

Figure 1 shows an arrangement of a typical disc player according to the present invention.

The disc player shown in fig 1 is an optical disc player adapted for reproducing the information from a compact disc player 1.

The compact disc 1 is rotationally driven by a spindle motor 3 which is controlled in its operation by a motor control unit 2. The information recorded on the compact disk 1 is read optically by an optical head 4 operating as information reading means.

The optical head 4 causes a light beam from, for example, a laser light source, to be irradiated on the compact disk 1, while the beam is converged by an objective lens, not shown, on a signal recording surface of the compact disk. The compact disk 1 also detects the light beam by a photodetector, not shown, which light beam has been modulated in accordance with the information recorded on the compact disk 1 and reflected by the compact disk, for generating information readout signals. The optical head 4 also has enclosed therein focusing controlling means for moving the objective lens in the focusing direction in a controlled manner for maintaining the light beam incident on the compact disk 1 in a correctly converged state, and tracking controlling means for causing the light beam incident on the compact disk 1 to correctly follow the recording track on the compact disk 1. Feed means, not shown, are provided within the main body of the disk player to cause the optical head in its entirety to be moved radially of the compact disk 1.

The information readout signals, obtained at the optical head 4, are supplied to a readout signal processor 6 by way of a reproducing amplifier 5.

The readout signal processor 6 reproduces TOC(Table of Contents) data indicating the record contents of the compact disk 1, total playing time or the like, play data, address data or the like from the information readout signals. This readout signal processor 6 is constituted by a digital signal processing circuit for reproducing the above mentioned various data from the information readout signals by digital signal processing. The data necessary for digital signal processing in the readout signal processor 6 are stored in a random access memory 7.

The play data reproduced in the readout signal processor 6 are processed by a digital filter 8 and thence supplied to a digital-to-analog converter 9. The digital-to-analog converter 9 causes the play data to be converted into analog signals and outputs the converted analog signals as playback audio signals.

The TOC data and the address data reproduced by the readout signal processor 6 are supplied to a system controller 10.

To the system controller 10 are connected an input operating section 11 for presetting an operating mode for the disk player and a non-volatile random access memory 12 having a battery as a backup power source. The system controller 10 controls the operation of the readout signal processor 6, digital filter 8, a head servo section 13 or a display section 14 on the basis of the above mentioned TOC data or address data under the operational mode preset at the input operating section.

The disk player of the present embodiment is provided with a clock generator 14 adapted for selectively outputting reproducing clock signals, CK1, CK2 having different frequencies under selective control by the system controller 10. When the normal reproducing mode is set by the system controller 10, the clock generator 14 generates normal reproducing clock signals CK1 for reproducing the compact disk 1 at the normal reproducing speed by a first crystal oscillator X1. When the high-speed reproducing mode is set by the system controller 10, the clock generator 14 generates high-speed reproducing clock signals CK2 having a frequency twice the frequency of the normal reproducing clock signals CK1 by a second crystal oscillator X2 for reproducing the compact disk 1 at a reproducing speed twice the normal reproducing speed.

When the normal reproducing mode is set by the system controller 10, the disk player performs a normal reproducing operation at the timing of the normal reproducing clock signals CK1 supplied by the clock generator 14. When the high speed reproducing mode is set by the system controller 10, the disk player performs a high speed reproducing operation at the timing of the high speed reproducing clock signals CK2 supplied by the clock generator 14.

With the high speed reproducing mode, play data are reproduced at a speed twice the reproducing speed for the normal playback audio data under the normal reproducing mode.

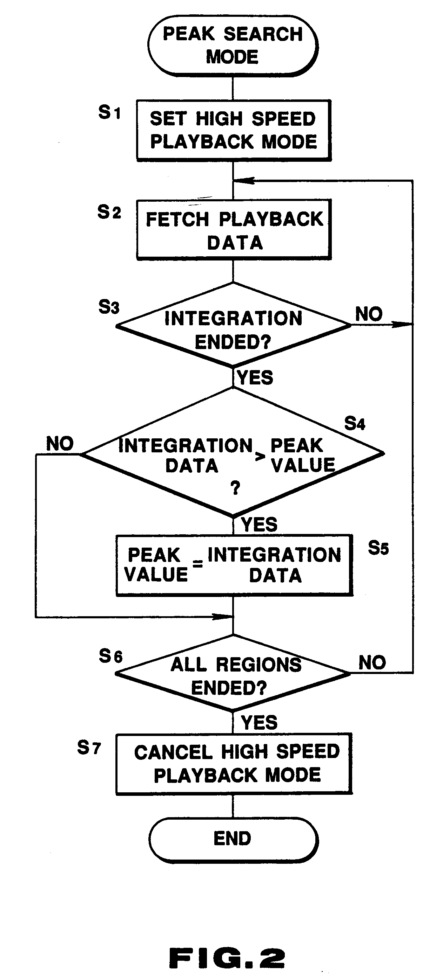

Upon accepting a peak search mode setting input, as a result of the actuation of the input operating section 11, the system controller 10 functions as maximum playback output level detection means performing a peak search mode control operation in the sequence shown in the flow chart of Fig. 2.

That is, upon accepting, as a result of operation of the input operating section 11, the peak search mode setting command, the system controller 10 enters into the peak search mode, and sets a high speed playback mode at first step S1 to start the high speed playback operation.

During the next second step S2, the play data reproduced by the readout signal processor 6 from the compact disk 1 under the high speed reproducing mode are sampled and fetched to the RAM where they are subjected to an integrating operation.

During the next third step S3, it is determined whether the integrating operation at the second step S2 has been performed over a predetermined integrating time interval T. If the result of decision at the third step S3 is NO, that is if the integrating operation over the predetermined integrating time has not yet elapsed the program loops to the second step S2 to repeat the integrating operation. If the result of decision at the third step S3 is YES, that is if the integrating operation over the predetermined integrating time is terminated, the program proceeds to the next fourth step S4.

At the fourth step S4, it is determined if the value of integration of the play data over the predetermined integrating time, obtained by the repetition of the operations at the second and third steps S2 and S3, is larger than the peak value up to the current time point. If the result of decision at the fourth step S4 is NO, that is if the value of integration of the play data over the above mentioned predetermined integration time is not larger than the peak value at the current time, the program proceeds to the next sixth step S6 which will be explained subsequently. If the result of decision at the fourth step S4 is YES, that is if the value of integration of the play data over the predetermined integration time T is larger than the peak value at the current time point, the program proceeds to the fifth step S5.

At the fifth step S5, the value of integration of the play data over the above mentioned predetermined time T is stored, as thenew peak value up to the current time point, along with the address data of the play data at which the value of integration has been obtained, in the random access memory 12.

At the next step S6, it is determined whether the peak value detecting operation from the second step S2 to the fifth step S5 has been performed for all of the program regions on the compact disk 1. If the result of decision at the sixth step S6 is NO, that is if the peak value detecting operation has not been terminated for all of the program regions (on the disc) the program loops to the second step S2 to perform the peak value detecting operation for a new program region. If the result of decision at the sixth step S6 is YES, that is if the peak value detecting operation has been terminated for all of the program regions, the program proceeds to the next seventh step S7.

At the seventh step S7, the program cancels the high-speed playback mode set at the first step S1 to terminate the peak search mode control operation.

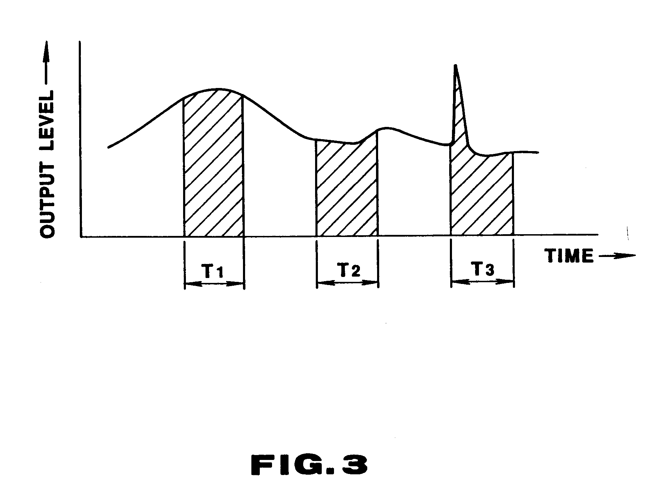

Thus, when the peak search mode control operation is performed by the system controller 10, the processing operation at the second and third steps S2 and S3 for the play program recorded on the compact disk 1 loaded on the disk player that is, digital audio signals corresponding to the audio signals shown in Fig. 3, is repeatedly performed at the system controller 10 to find an integrated value for each of the integrating time intervals T1, T2, T3, ... shown hatched in figure 3. The integration values thus found are compared with one another at the fourth step S4 to find the time period T1 among the time periods T1, T2, T3, ... corresponding to the maximum integration value, that is the maximum mean signal level.

It will be noted that, although an instantaneous peak level higher than the maximum level during the integrating time period T1 exists within the integrating time interval T3, such instantaneous peak level is not noticed on account of the presence of the attack or recovery time of the auditory sense of the human ear and the response characteristics of the level meter of a tape recorder. By detecting the time period T1 with the maximum mean signal level as the peak, it becomes possible to detect the proper peak best adapted to the auditory sense of the human ear or to the level meter response characteristics.

On termination of the above described peak search mode control operation, the system controller 10 performs, on the basis of the above mentioned peak information stored in the RAM 12, the control operation of automatically reproducing the vicinity of the play data for which the maximum integration value has been obtained as a result of the peak search mode control operation. This allows the user to set the recording level promptly.

Also with the above described disk player, the peak search mode control operation by the system controller 10 is performed with the high speed reproducing mode set at the first step S1, so that the peak detecting operation may be accomplished in a shorter time than at normal reproduction speed. In addition, with the above described disc player, since the play data reproduced from the compact disk 1 by the readout signal processor 6 under the high speed reproducing mode are sampled at the second step S2 for performing peak detection, the time required for peak detection may be shortened additionally.

## Claims

1. A disc player for reproducing recorded digital audio signals from a disc comprising:
disc reproducing means (1-6) having a normal playback mode for performing a normal playback operation at a speed determined by the timing of normal reproducing clock signals (CK₁); and
maximum playback output level (10) detecting means for detecting the maximum playback output level of digital audio signals obtained upon reproducing said digital audio signals from a disc; characterised in that:
said disc reproducing means also has a high speed playback mode for performing a high speed playback function at a speed determined by the timing of high speed reproducing clock signals (CK₂) having a frequency higher than the frequency of said normal reproducing clocks; and
said maximum playback output level detection means is operative whilst said disc reproducing means is operating in said high speed playback mode to integrate the digital audio signals reproduced by said disc reproducing means over each of a succession of predetermined integrating time intervals, to compare the integrated values so obtained to find the maximum integrated value and to designate the value so formed as the maximum playback output level.

2. The disc player according to claim 1, wherein said disc reproducing means comprises clock generating means (15) for generating said normal reproducing clock signals (CK₁) and said high speed reproducing clock signals (CK₂), and control means (10) for controlling said clock generating means for setting said normal reproducing mode by said normal playback function or said high speed reproducing mode by said high speed reproducing clock signals.

3. The disc player according to claim 2, wherein the disc playback speed of said disc reproducing means during said high speed reproducing mode is set so as to be at least twice the disc playback speed during said normal playback mode.

4. The disc player according to any one of the preceding claims, wherein said maximum playback output level detection means comprises storage means (12) for storing the detected maximum integrated value as the maximum playback output level.

5. The disc player according to claim 4, wherein said storage means (12) is operative to store said detected maximum integration value as the maximum playback output level and to store the address information of the corresponding section of the digital audio signals from which it was derived.

6. The disc player according to any one of the preceding claims wherein said disc reproducing means is operative automatically to reproduce a portion of said disc at which said maximum playback output level is obtained and a near-by portion after termination of said high-speed reproducing mode.

7. A method for detecting a peak value in digital audio signals comprising:
integrating the digital audio signal reproduced by reproducing means from a recording medium having said digital audio signals recorded thereon over each of a succession of predetermined integrating time intervals and comparing the integrated values for the integrating time periods to find the maximum integrated value which then is used as the peak information.

8. The method according to claim 7 further comprises
first accepting a peak search mode setting command, and simultaneously starting a high-speed reproducing operation by said reproducing means.

9. The method according to claim 8 wherein the reproducing operation during the peak search mode is performed at a higher speed than the reproducing speed for the normal playback mode for said recording medium by said reproducing means.

10. The method according to claim 7, 8 or 9, wherein the detected maximum integrated value is stored as the peak information.

11. The method according to claim 10, wherein the address information of the section of the digital audio signal from which said maximum integration value has been obtained is stored along with said maximum integrated value.

## Patentansprüche

1. Plattenabspielgerät für die Wiedergabe aufgezeichneter digitaler Audiosignale von einer Platte, welches umfaßt:
Plattenwiedergabemittel (1-6) mit einem normalen Wiedergabemodus zur Durchführung eines normalen Wiedergabebetriebs mit einer Geschwindigkeit, welche durch die Zeitsteuerung von normalen Wiedergabetaktsignalen (CK₁) vorgegeben wird; und
Detektionsmittel (10) für den maximalen Wiedergabeausgangssignalpegel zur Feststellung des maximalen Wiedergabegangssignalpegels der digitalen Audiosignale, welche aufgrund der Wiedergabe der digitalen Audiosignale von einer Platte erhalten werden; dadurch gekennzeichnet,
daß die Plattenwiedergabemittel außerdem einen Hochgeschwindigkeits-Wiedergabemodus zur Durchführung eines Hochgeschwindigkeits-Wiedergabebetriebs mit einer Geschwindigkeit, welche durch die Zeitsteuerung von Hochgeschwindigkeits-Wiedergabetaktsignalen (CK₂) mit einer Frequenz, die höher als die Frequenz der normalen Wiedergabetakte ist, vorgegeben wird, aufweisen; und
daß die Detektionsmittel für den maximalen Wiedergabeausgangssignalpegel wirksam sind, während die plattenwiedergabemittel im Hochgeschwindigkeits-Wiedergabemodus arbeiten, um die durch die Plattenwiedergabemittel wiedergegebenen digitalen Audiosignale über jedes von einer Folge von vorgegebenen Integrationszeitintervallen zu integrieren, um die so erhaltenen integrierten Werte zu vergleichen, um den maximalen integrierten Wert zu finden und um den so gebildeten Wert als den maximalen Wiedergabeausgangspegel zu kennzeichen.

2. Plattenabspielgerät nach Anspruch 1, bei welchem die Plattenwiedergabemittel Takterzeugungsmittel (15) zur Erzeugung der normalen Wiedergabetaktsignale (CK₁) und der Hochgeschwindigkeits-Wiedergabetaktsignale (CK₂) und Steuerungsmittel (10) zur Steuerung der Takterzeugungsmittel zur Einstellung des normalen Wiedergabemodus durch die normale Wiedergabefunktion oder des Hochgeschwindigkeits-Wiedergabemodus durch die Hochgeschwindigkeits-Wiedergabetaktsignale umfassen.

3. Plattenabspielgerät nach Anspruch 2, bei welchem die Plattenwiedergabegeschwindigkeit der Plattenwiedergabemittel während des Hochgeschwindigkeits-Wiedergabemodus so eingestellt ist, daß sie mindestens das Doppelte der Plattenwiedergabegeschwindigkeit während des normalen Wiedergabemodus beträgt.

4. Plattenabspielgerät nach einem der vorhergehenden Ansprüche, bei welchem die Detektionsmittel für den maximalen Wiedergabeausgangssignalpegel eine Speichereinrichtung (12) zum Speichern des festgestellten maximalen integrierten Werts als den maximalen Wiedergabeausgangssignalpegel umfassen.

5. Plattenabspielgerät nach Anspruch 4, bei welchem die Speichereinrichtung (12) wirksam ist, um den festgestellten maximalen Integrationswert als den maximalen Wiedergabeausgangssignalpegel zu speichern und die Adresseninformation des entsprechenden Abschnitts der digitalen Audiosignale, aus welchem er abgeleitet worden ist, zu speichern.

6. Plattenabspielgerät nach einem der vorhergehenden Ansprüche, bei welchem die Plattenwiedergabemittel wirksam sind, um automatisch nach Beendigung des Hochgeschwindigkeits-Wiedergabemodus einen Teil der Platte, in welchem der maximale Wiedergabeausgangssignalpegel erhalten wurde, und einen nahegelegenen Teil wiederzugeben.

7. Verfahren zur Feststellung eines Spitzenwerts in digitalen Audiosignalen, welches umfaßt:
Integrieren der durch die Wiedergabemittel von einem Aufzeichnungsmedium, auf welchem die digitalen Audiosignale aufgezeichnet sind, wiedergegebenen digitalen Audiosignale über jedes von einer Folge von vorgegebenen Integrationszeitintervallen und Vergleichen der integrierten Werte für die Integrationszeitperioden, um den maximalen integrierten Wert zu finden, welcher dann als die Spitzenwertinformation verwendet wird.

8. Verfahren nach Anspruch 7, welches weiterhin umfaßt:
als erstes das Annehmen eines Spitzenwertsuchmodus-Einstellbefehls und gleichzeitig das Beginnen eines Hochgeschwindigkeits-Wiedergabebetriebs durch die Wiedergabemittel.

9. Verfahren nach Anspruch 8, bei welchem die Wiedergabetätigkeit durch die Wiedergabemittel während des Spitzenwertsuchmodus mit einer höheren Geschwindigkeit als die Wiedergabegeschwindigkeit im normalen Wiedergabemodus für das Aufzeichnungsmedium durchgeführt wird.

10. Verfahren nach Anspruch 7, 8 oder 9, bei welchem der festgestellte maximale integrierte Wert als die Spitzenwertinformation gespeichert wird.

11. Verfahren nach Anspruch 10, bei welchem die Adresseninformation des Abschnitts des digitalen Signals, von welchem der maximale Integrationswert erhalten wurde, zusammen mit dem maximalen integrierten Wert gespeichert wird.

## Revendications

1. Lecteur de disque pour reproduire des signaux audio numériques enregistrés à partir d'un disque, comprenant :
un moyen de reproduction de disque (1 à 6) possédant un mode de lecture normale pour effectuer une opération de lecture normale à une vitesse déterminée par le cadencement de signaux d'horloge de reproduction normale (CK1) ; et
un moyen de détection de niveau maximal de sortie de lecture (10) pour détecter le niveau maximal de sortie de lecture des signaux audio numériques obtenus lors de la reproduction desdits signaux audio numériques à partir du disque ; caractérisé en ce que :
ledit moyen de reproduction de disque comporte également un mode de lecture à grande vitesse pour exécuter une fonction de lecture à une vitesse déterminée par le cadencement de signaux d'horloge de reproduction a grande vitesse (CK2) ayant une fréquence plus élevée que la fréquence desdits signaux d'horloge de reproduction normale ; et
en ce que ledit moyen de détection de niveau maximal de sortie de lecture est mis en oeuvre pendant que ledit moyen de reproduction de disque fonctionne dans ledit mode de lecture à grande vitesse pour intégrer les signaux audio numériques reproduits par ledit moyen de reproduction de disque, sur chacun d'une succession d'intervalles de temps d'intégration prédéterminés, pour comparer les valeurs intégrées ainsi obtenues pour trouver la valeur intégrée maximale et pour désigner la valeur ainsi formée comme étant le niveau maximal de sortie de lecture.

2. Lecteur de disque selon la revendication 1, dans lequel ledit moyen de reproduction de disque comprend un moyen générateur de signaux d'horloge (15) pour produire lesdits signaux d'horloge de reproduction normale (CK1) et lesdits signaux d'horloge de reproduction à grande vitesse (CK2), et un moyen de commande (10) pour commander ledit moyen générateur de signaux d'horloge pour imposer ledit mode de reproduction normale par ladite fonction de lecture normale ou ledit mode de reproduction à grande vitesse par lesdits signaux d'horloge de reproduction à grande vitesse.

3. Lecteur de disque selon la revendication 2, dans lequel la vitesse de lecture du disque dudit moyen de reproduction de disque en mode de reproduction à grande vitesse est fixée de façon à être au moins deux fois la vitesse de lecture de disque en mode de lecture normale.

4. Lecteur de disque selon l'une quelconque des revendications précédentes, dans lequel ledit moyen de détection de niveau maximal de sortie de lecture comprend un moyen de mémorisation (12) pour mémoriser la valeur intégrée maximale en tant que niveau maximal de sortie de lecture.

5. Lecteur de disque selon la revendication 4, dans lequel ledit moyen de mémorisation (12) sert à mémoriser ladite valeur d'intégration maximale détectée en tant que niveau maximal de sortie de lecture et à mémoriser l'information d'adresse de la section correspondante des signaux audio numériques à partir de laquelle elle a été obtenue.

6. Lecteur de disque selon l'une quelconque des revendications précédentes, dans lequel ledit moyen de reproduction de disque sert à reproduire automatiquement la partie dudit disque où l'on a obtenu ledit niveau maximal de sortie de lecture et une partie toute proche après la fin dudit mode de reproduction à grande vitesse.

7. Procédé pour détecter une valeur de crête dans des signaux audio numériques, comprenant :
l'intégration du signal audio numérique, reproduit par un moyen de reproduction à partir d'un support d'enregistrement sur lequel sont enregistrés lesdits signaux audio numériques, sur chacun d'une succession d'intervalles de temps d'intégration prédéterminés ; et la comparaison des valeurs intégrées pendant les périodes de temps d'intégration pour trouver la valeur intégrée maximale qui est alors utilisée comme information de crête.

8. Procédé selon la revendication 7, comprenant en outre, en premier l'acceptation d'une instruction de réglage de mode de recherche de crête, et simultanément de démarrage d'une opération de reproduction a grande vitesse, par ledit moyen de reproduction.

9. Procédé selon la revendication 8, dans lequel ledit moyen de reproduction effectue l'opération de reproduction en mode de recherche de crête à une vitesse plus élevée, dudit support d'enregistrement, que la vitesse de reproduction pour le mode de lecture normale.

10. Procédé selon la revendication 7, 8 ou 9, dans lequel la valeur intégrée maximale détectée est mémorisée en tant qu'information de crête.

11. Procédé selon la revendication 10, dans lequel l'information d'adresse de la section de signal audio numérique à partir de laquelle on a obtenu la valeur d'intégration maximale est mémorisée accompagnée de ladite valeur intégrée maximale.
